Europäisches Patentamt

European Patent Office

Office européen des brevets

(11) Veröffentlichungsnummer: **0 075 605**
**B1**

(12) **EUROPÄISCHE PATENTSCHRIFT**

(45) Veröffentlichungstag der Patentschrift: **21.01.87**

(21) Anmeldenummer: **81107627.2**

(22) Anmeldetag: **25.09.81**

�IntⒸl.⁴: **B 01 L 3/00, G 01 N 21/03**

(54) **Vorrichtung für photometrische Analysen.**

(43) Veröffentlichungstag der Anmeldung:
**06.04.83 Patentblatt 83/14**

(45) Bekanntmachung des Hinweises auf die
Patenterteilung:
**21.01.87 Patentblatt 87/04**

(84) Benannte Vertragsstaaten:
**AT BE CH DE FR GB IT LI LU NL SE**

(56) Entgegenhaltungen:
**EP-A-0 018 435**
**DD-B- 107 783**
**US-A-3 859 050**

(73) Patentinhaber: **Stöcker, Winfried, Dr. med.**
**Am Sonnenberg 9**
**D-2401 Gross Grönau (DE)**

(72) Erfinder: **Stöcker, Winfried, Dr. med.**
**Am Sonnenberg 9**
**D-2401 Gross Grönau (DE)**

(74) Vertreter: **UEXKÜLL & STOLBERG**
**Patentanwälte**
**Beselerstrasse 4**
**D-2000 Hamburg 52 (DE)**

**Description**

Die vorliegende Erfindung betrifft eine Analysevorrichtung mit Reaktionsgefäßen, die nur wenige Mikroliter Flüssigkeit fassen und mit nicht viel mehr Flüssigkeit gefüllt werden müssen, als unmittelbar für die Schwächung der Meßstrahlung erforderlich ist. Die Analysen können verlustfrei und direkt im von der Meßstrahlung durchsetzten Teil der Reaktionsgefäße gemischt werden.

Stand der technik

In der DD—A—107 783 wird eine Analysevorrichtung beschrieben, mit der zwischen zwei Platten beliebig viele flüssige Proben nebeneinander untersucht werden können. Die Platten tragen Reaktionsflächen, die von ihrer Umgebung durch Nuten, Vorsprünge oder Vertiefungen abgesetzt sind. Das Reaktionsgemisch bildet eine Flüssigkeitssäule aus, die von zwei sich gegenüberliegenden Reaktionsflächen durch Adhäsionskräfte festgehalten wird. Zum Mischen wird der Plattenabstand und dadurch die Form der Flüssigkeitssäule verändert, wodurch eine Konvektion in der Flüssigkeit entsteht. Die Platten sind im Bereich der Reaktionsflächen strahlendurchlässig und ermöglichen eine Photometrie senkrecht zur Plattenebene.

Die in der EP—A—0 018 435 angegebene Vorrichtung zur Durchführung von Mikroanalysen (weiterentwickelt in der DE—Patentanmeldung 3 107 964.4) unterscheidet sich von dieser Methode im wesentlichen darin, daß die verwendeten Platten plan sind und die benachbarten Analysen durch eine hydrophil-hydrophobe Beschichtung der beiden Platten auseinandergehalten werden. Über 25 Proben können auf einem Quadratzentimeter gleichzeitig nebeneinander untersucht werden.

Beide Methoden eignen sich hervorragend zur Durchführung von Mikroanalysen, weil durch die Anordnung der Platten in den Gestellen eine Verdunstung der Flüssigkeit stark gebremst wird. Sie weisen aber Mängel hinsichtlich der photometrischen Auswertung auf:

a) Während der Analyse ändert sich mit dem Plattenabstand die für die Photometrie zur Verfügung stehende Schichtlänge. Der Plattenabstand läßt sich nur schwer exakt und reproduzierbar einstellen. Das führt zu Ungenauigkeiten der Meßergebnisse.

b) Sehr viele photometrische Analyserverfahren, beispielsweise in der Klinischen Chemie, sind auf optische Wegstrecken von 10 mm abgestimmt. Das Einsatzgebiet der beiden oben beschriebenen Methoden ist aber auf kürzere Wegstrecken beschränkt: Bei mehr als 1,5 mm nimmt die Flüssigkeitssäule eine unten zunehmend ausladende Form an, wodurch sich der für die Photometrie genutzte Anteil des Reaktionsgemisches stark verringert. Während bei 1 mm Schichtlänge (Plattenabstand) nur 1 Mikroliter Reaktionsgemisch erforderlich ist, benötigt man bei 3 mm in der Regel schon 50 Mikroliter. Bei einem Platten-abstand von mehr als 3 mm reißt die Flüssigkeitssäule und eine regelrechte Photometrie ist nicht mehr möglich. Durch Zusatz geeigneter Substanzen zum Reaktionsgemisch, beispielsweise 5 % Carboxymethylcellulose, könnte man mit 50 Mikroliter die Platten für eine photometrische Messung genügend lange über 10 mm auseinanderhalten, ohne daß die Flüssigkeitssäule auseinanderreißt, aber dadurch würde der Aufwand für die Analysen erhöht.

c) Im übrigen müssen die Reaktionsflächen bei den Plattenmethoden für eine photometrische Auswertung optisch transparent sein. Wenn sie beispielsweise vor der Analyse mit Reagenzien beschichtet werden, kann sich die Transparenz verringern, und es entstehen Fehler bei der Messung.

Aufgabe der erfindung

Es soll eine Vorrichtung geschaffen werden, mit der man Mikroanalysen durchführen kann, ähnlich schnell und rationell wie mit den oben beschriebenen Plattenmethoden, aber mit der Mög-lichkeit einer besseren photometrischen Auswer-tung der Analysen.

Beschreibung der erfindung

Die Erfindung löst die gestellte Aufgabe dadurch, daß sie eine Analysevorrichtung aus mindestens zwei voneinander trennbaren und gegeneinander beweglichen Platten schafft, die Adhäsionsflächen 1, 2 tragen, wobei die Adhäsionsflächen länglich ausgebildet sind und an den Längsenden Erhebungen aufweisen (Fenster 3a; Fenster 3b), die für den Meßstrahl eines Photometers durchlässig sind. Die Adhäsionsflächen mehrerer Platten liegen sich gegenüber und formen Reaktionsgefäße von wenigen Mikrolitern Inhalt, indem sie die zu untersuchende Flüssigkeit 4 von mindestens zwei Seiten her festhalten.

Die Wirkungsweise der Erfindung wird im folgenden anhand mehrerer Figuren erläutert. Es zeigen.

Figur 1 und Figur 4: Analysevorrichtungen der Erfindung,

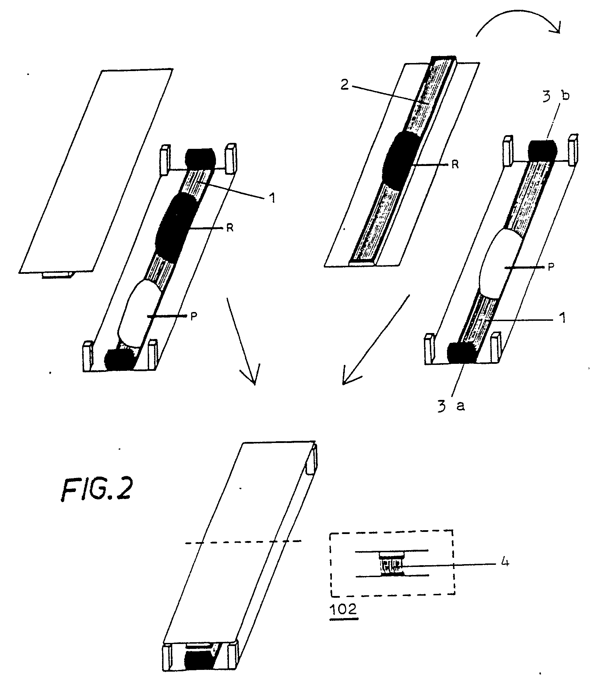

Figur 2: das separate Auftragen von Probe und Reagenz auf die Adhäsionsflächen,

Figur 3: das Auftragen und Vermischen von Probe und Reagenz,

Figur 5: unterschiedlich gestaltete Adhäsionsflächen im Querschnitt,

Figur 6: eine in mehrere Zonen unterteilte Adhäsionsfläche,

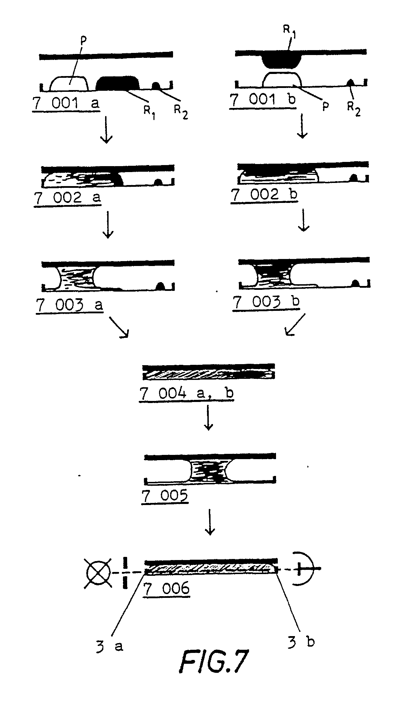

Figur 7: die Zugabe von Startreagenz nach einer Vorreaktion,

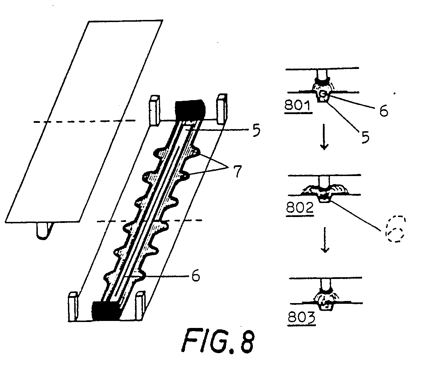

Figur 8: das Starten einer Reaktion durch Zerbrechen einer Kapillare,

Figur 9: eine Analysevorrichtung mit Zulauf und Ablauf für Waschflüssigkeit und mit vorbeschichtetem Träger,

Figur 10: eine Analysevorrichtung mit einer flexiblen Hohlkugel als vorbeschichtetem Träger,

Figur 11: eine lineare Platte mit 20 Adhäsionsflächen (Querschnitt) und ein Positionierrastwerk,

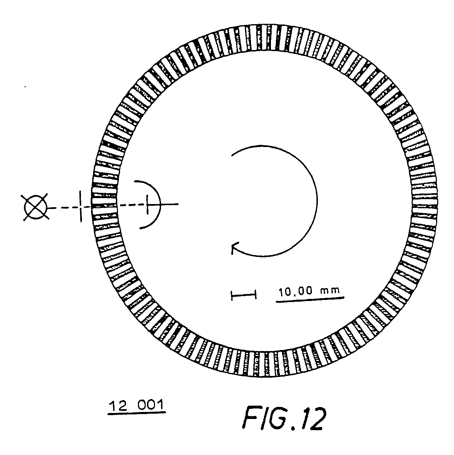

Figur 12: eine zirkuläre Platte mit 100 Adhäsionsflächen (Draufsicht) und

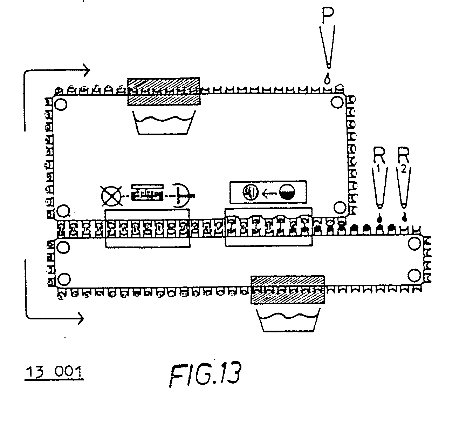

Figur 13: eine Analysevorrichtung mit zwei Förderbändern.

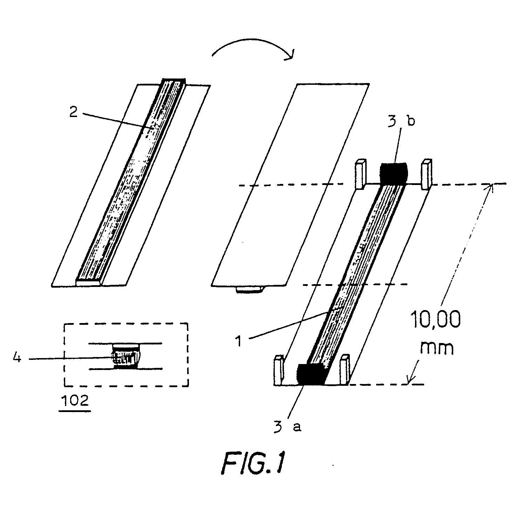

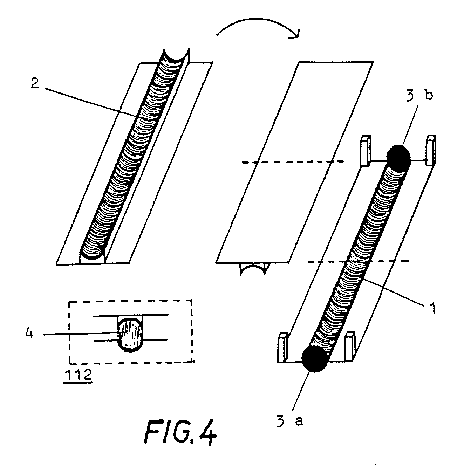

Ein Reaktionsgefäß der Erfindung besteht in einer einfacheren Ausführungsform aus zwei Adhäsionsflächen 1, 2 und zwei seinkrecht zu diesen stehenden Erhebungen (Fenster) 3a, 3b, die an einer der Adhäsionsflächen befestigt sine können (z. B. Figuren 1 und 4).

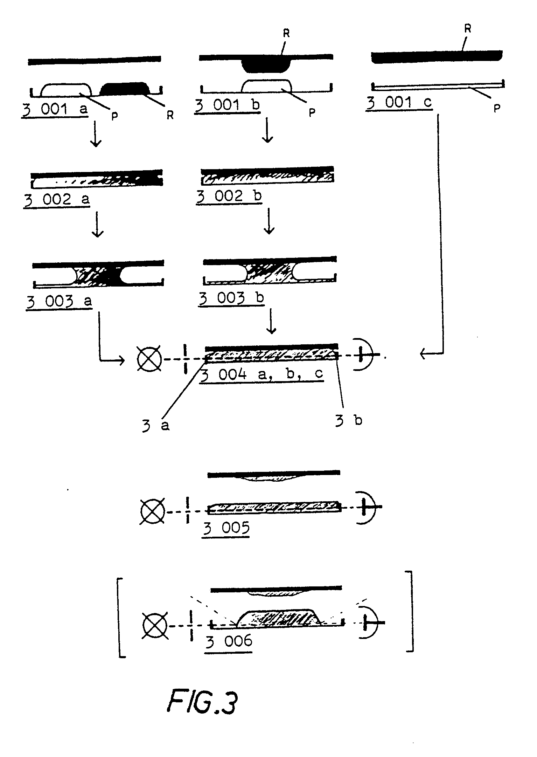

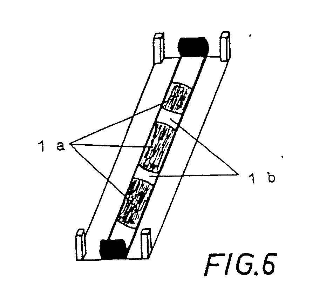

Zum Füllen eines Reaktionsgefäßes werden die Adhäsionsflächen mit Probe und Reagenzien versehen 3001a, b, c, übereinandergelegt und einander genähert, bis Probe und Reagenzien zusammentreffen 3002a, b (Figur 3). Weil die Probe und die Reagenzien auf verschiedene Stellen 1a (Figur 6) einer Adhäsionsfläche 3001a oder auf verschiedene Adhäsionsflächen 3001b, c getropft werden, kommen sie nicht vorzeitig miteinander in Kontakt, die Reaktion wird zu einem genau bestimmbaren Zeitpunkt gestartet. Das zweite Dosiergerät wird nicht mit dem zuerst dosierten Reaktionsteilnehmer verunreinigt.

Zum Mischen kann man jetzt die Adhäsionsflächen innerhalb bestimmter Grenzen mehrmals periodisch aufeinander zu und voneinander weg bewegen 3002a, b—3003a, b. Ein Gestell legt diese Grenzen fest und verhindert, daß die Adhäsionsflächen seitlich gegeneinander verrutschen. Bei jeder Periode wird der größte Teil der zwischen den Adhäsionsflächen festgehaltenen Flüssigkeit in die Mitte der Reaktionsgefäße gezogen 3003a, b und dann wieder nach außen verdrängt 3004. Das ist auch bei kleinsten Volumina und mit über 100 mm langen Reaktionsgefäßen ohne Schwierigkeit möglich, und es kommt eine so starke Konvektion zustande, daß der Analyseansatz innerhalb sehr kurzer Zeit durchmischt ist. Beim Mischen wird weder der Strahlengang verlegt noch die Schichtlänge verändert.

Bei kinetischen Untersuchungen schnell ablaufender chemischer Reaktionen müssen die Reaktionsteilnehmer innerhalb weniger Millisekunden untereinander vermischt werden. Für diesen Zweck werden sie, getrennt voneinander, auf der ganzen Länge der beiden Adhäsionsflächen ausgebreitet 3001c und dann zusammengebracht 3004. Die Diffusionswege sind bei einem genügend kleinen Durchmesser des Flüssigkeitszylinders so kurz, daß sich die Reaktionspartner sehr schnell gleichmäßig verteilen.

Bei einer photometrischen Analyse leitet man das Strahenbündel in der Regel parallel zu den Adhäsionsflächen durch die beiden Fenster 3a, b; 3004, 7006, 10004. Wenn die Adhäsionsflächen ihren kleinsten Abstand voneinander einnehmen, weicht die Flüssigkeit bis an die Fenster aus und benetzt sie von innen. Dadurch wird verhindert, daß die Strahlung an den Grenzflächen zwischen Flüssigkeit und Luft reflektiert und gebrochen wird 3006.

Die Adhäsionsflächen brauchen nicht transparent zu sein, weil sie nicht vom Strahlenbündel des Photometers durchsetzt werden. Man kann sie daher auch mit solchen Reagenzien vorbeschichten, die sich während der Analyse nicht auflösen und Meßstrahlung absorbieren. Die Adhäsionsflächen können sogar aufgerauht werden, damit sie mehr Reagenzien binden. Zur Temperierung des Reaktionsgemisches können die Adhäsionsflächen beheizt oder gekühlt werden, z. B. mit Peltierelementen.

Der Abstand beider Erhebungen (Fenster 3a, 3b) voneinander muß während der photometrischen Analyse nicht verändert werden. Dadurch ist die für die Schwächung des Strahlungsflusses wirksame Schichtlänge konstant. Sie kann 10,00 mm, aber auch bis über 100,00 mm betragen.

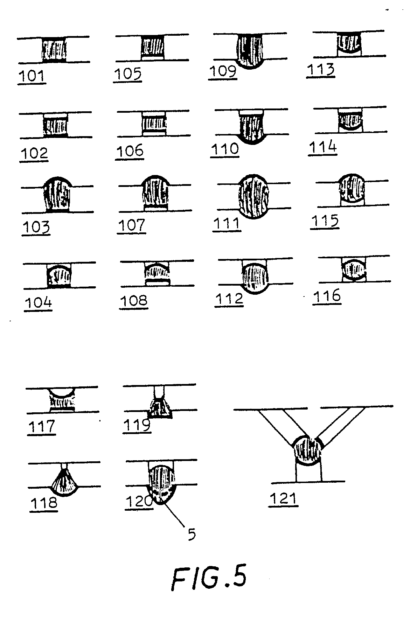

Das Reaktionsgemisch wird durch die sich gegenüberliegenden Adhäsionsflächen festgehalten und entgegen seinem Bestreben, die Oberfläche zu minimieren und sich kreis- oder kugelförmig auszubreiten, in eine längliche Form gebracht. Diese Form ist außer durch das Volumen und die Adhäsions- und Kohäsionseigenschaften der Flüssigkeit im wesentlichen durch das Profil (z. B. 101 bis 121, Figur 5) der Adhäsionsflächen, ihren Abstand voneinander und durch den Abstand der beiden Erhebungen (Fenster 3a, 3b) voneinander bestimmt (z. B. 10,00 mm in Figur 1). Die Adhäsionsflächen lassen sich so gestalten, daß sich alles Reaktionsgemisch unmittelbar für die Analyse nutzen läßt und ein Überschuß nicht erforderlich ist. Man kann das Reaktionsgemisch beispielsweise zu einem Zylinder formen (Figur 4: 112). Ein 10 mm langer Zylinder mit 1 mm Durchmesser hat ein Volumen von 7,85 Mikroliter. Für viele mit den Reaktionsgefäßen der Erfindung durchgeführte photometrische Analysen reicht dieses Volumen aus, wenn ein geeignetes Photometer vorhanden ist. Es ist aber beispielsweise auch möglich, einen Tropfen mit einem Volumen von 1 Mikroliter auf 10 mm oder auf 100 mm Länge zu strecken.

Die Adhäsionsflächen können plan sein (z. B. Figur 1: 102; Figur 5: 101, 102, 105, 106), vertieft (z. B. Figur 4: 112; Figur 5: 111, 112, 115, 116) oder erhaben (z. B. Figur 5: obere Adhäsionsflächen bei 117, 119). Sie können konkav sein, sie können auch von ihrer Umgebung durch eine beliebige Oberflächenstruktur abgesetzt sein. Sie können Eigenschaften aufweisen, durch die das Reaktionsgemisch angezogen wird, während ihre Umgebung das Reaktionsgemisch abstößt.

Die Adhäsionsflächen können selbst in hydrophile 1a und hydrophobe 1b Zonen unterteilt sein (Figur 6), oder mehrere Vertiefungen aufweisen, damit die Probe und die Reagenzien leichter nebeneinander plazier: werden können, ohne sich vorzeitig miteinander zu vermischen.

Die nähere Umgebund der Adhäsionsflächen darf keine zu engen Spalte aufweisen, in die sich durch Kapillarwirkung ein Teil des Reaktionsgemisches ausbreitete.

Je kleiner das Analysevolumen ist, umso stärker wird die Analyse beeinträchtigt, wenn die Reaktionsteilnehmer oder das Lösemittel verdunsten. Bei den oben zitierten Plattenmethoden wird das Verdunsten dadurch gebremst, daß die beiden sich gegenüberliegenden Platten zusammen mit ihrem Gestell eine feuchte Kammer bilden. Für die Reaktionsgefäße der vorliegenden Erfindung lassen sich ähnliche Verhältnisse schaffen. Sie können darüberhinaus so gestaltet werden, daß das Reaktionsgemisch mit sehr wenig Luft umgeben und dadurch zusätzlich vor dem Austrocknen geschützt ist (z. B. Figur 5: 116, 121).

Bei vielen Untersuchungen werden die Reaktionsteilnehmer dem Analyseansatz nacheinander zugegeben. Für die Zugabe eines Startreagenz kann man eine zusätzlich Adhäsionsfläche (Figur 5: 121) mit den ersten beiden Adhäsionsflächen zusammenbringen. Oder man plaziert die Probe und das erste Reagenz nebeneinander, das zweite Reagenz in einem kleineren Volumen und etwas abseits von den anderen 7001a, b. Nach der Vorreaktion 7002a, b werden die Adhäsionsflächen einander bis auf einen Minimalabstand genähert 7004. Erst jetzt vereinigt sich der dritte Reaktionsteilnehmer mit den ersten.

Es gibt noch eine andere Möglichkeit, dem Reaktionsgemisch ein Startreagenz zuzusetzen: Die untere Adhäsionsfläche wird so gestaltet, daß ein Teil von ihr unterhalb des Strahlenbündels zu liegen kommt (Depotzone 5). Die Depotzone kann eine mit Reagenzien gefüllte zugeschmolzene Glaskapillare 6 aufnehmen. Ihr Inhalt wird erst nach der Vorreaktion dem Analyseansatz zugemischt. Zu diesem Zweck wird die obere Adhäsionsfläche zum gewünschten Zeitpunkt einmal soweit abgesenkt 802, daß sie die Kapillare zerbricht. Ein Teil der Flüssigkeit wird dabei vorübergehend in Ausbuchtungen 7 der Adhäsionsflächen verdrängt. Das freigesetzte Startreagenz vermischt sich mit den anderen Reaktionsteilnehmern, und die Bruchstücke der Kapillare bleiben in der Depotzone liegen.

Eine Depotzone eröffnet zusätzliche Möglichkeiten für die Analytik: Eine Reaktion, bei der ein oder mehrere Ausgangs- oder Endprodukte ausgefällt werden, kann photometrisch beurteilt werden: Der Niederschlag sammelt sich in der Depotzone, und die im Überstand meßbare Extinktion nimmt ab (Beispiel: Blutgruppenbestimmung).

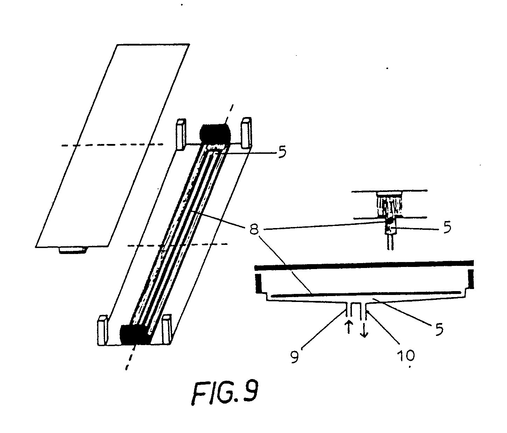

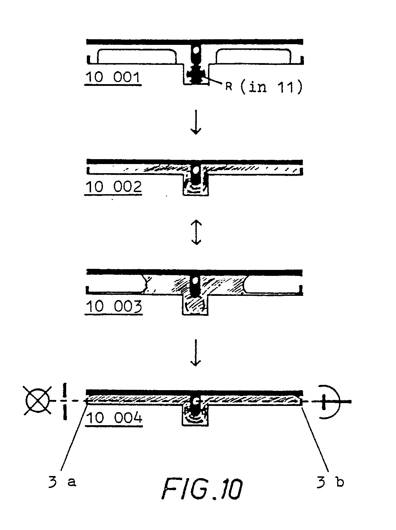

Bei einem Radioimmuntest oder bei einem Enzymimmuntest kann man auch einen mit Reagenzien vorbeschichteten Träger in die Depotzone legen, z. B. ein außen beschichtetes Stäbchen 8 (Figur 9) oder eine Kugel. Für denselben Zweck können auch eine elastisch flexible Hohlkugel 11 (Figur 10) oder ein Schwammkörper verwendet werden, die innen beschichtet sind und Öffnungen nach außen aufweisen. Sie werden während der Analyse durch Ändern des Abstandes beider Adhäsionsflächen voneinander abwechselnd zusammengepreßt und losgelassen 10002, 10003. Dabei geben sie Flüssigkeit ab, und beim Ausdehnen füllen sie sich wieder. Auch im entspannten Zustand reichen sie nicht bis zum Meßkanal hinauf, die Extinktion im Überstand kann ungehindert gemessen werden.

Im Verlauf mancher Analysen, z. B. vieler Radioimmuntests und Enzymimmuntests, muß das Reaktionsgefäß entleert und gewaschen werden. Das kann man durch einen Ablauf 10 und einen Zulauf 9 (Figur 9) erleichtern, die in eine Öffnung der unteren Adhäsionsfläche münden.

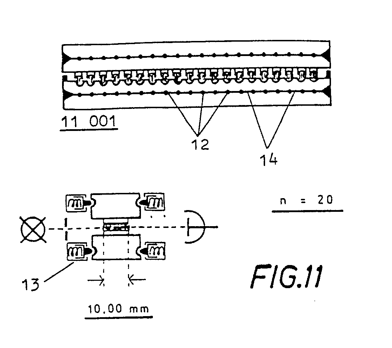

Man kann beliebig viele Reaktionsgefäße zu einer Einheit zusammenfassen und mehrere Proben synchron nebeneinander untersuchen 11001, 12001. Dadurch wird der Arbeitsablauf bei Serienuntersuchungen rationalisiert. Ein Rastmechanismus kann die Reaktionsgefäße immer exakt und reproduzierbar im Strahlengang des Photometers ausrichten. Dazu sind an zwei sich gegenüberliegenden Außenflächen der die Reaktionsgefäße tragenden Platten Rastungen 12 vorgesehen, die zusammen mit am Gehäuse des Photometers befestigten Rastfolgern 13 das Reaktionsgefäß genau im Strahlengang ausrichten (Figur 11). Eine Platte mit mehreren Reaktionsgefäßen läßt sich leichter im Photometer verschieben, wenn ihre Rastungen durch Nuten 14 verbunden sind.

Man kann mehrere Adhäsionsflächen auf zwei Förderbändern anordnen und daraus eine Vorrichtung konstruieren, in der beliebig viele Analysen gleichzeitig asynchron nebeneinander ablaufen 13001.

Man kann ein zusammengesetztes Reaktionsgefäß der Erfindung als eine der Länge nach gespaltene Kapillare betrachten, z. B. 112 in Figur 4. Die Spalte werden gerade so eng gestellt, daß Luft ungehindert austreten kann, Flüssigkeit aber zurückgehalten wird. Die Flüssigkeit ist bestrebt, ihre Grenzfläche zur Luft nicht zu vergrößern und tritt deshalb nicht freiwillig durch die Spalte. Man kann deshalb zwei Flüssigkeiten von beiden Seiten aus gleichzeitig in die "Kapillare" füllen. Die trennende Luft entweicht durch die Spalte, und die Flüssigkeiten treffen innerhalb der "Kapillare" zusammen. Das läßt sich für Untersuchungen ausnutzen, bei denen eine Grenzschicht zwischen zwei Flüssigkeiten beurteilt wird, beispielsweise bei der Blutgruppenbestimmung mit Kapillaren. Bei der Originalmethode mit geschlossenen Kapillaren müssen wegen der störenden Luft beide Flüssigkeiten durch denselben Eingang in die Kapillare gefüllt werden. Dabei bekommt die zweite Flüssigkeit vorzeitig Kontakt mit an der Innenwand der Kapillare haftenden Resten der zuerst aufgenommenen Flüssigkeit, störende Luftblasen können zwischen beide Flüssigkeiten gelangen und das Reservoir der zweiten Flüssigkeit kann mit der ersten Flüssigkeit verunreinigt werden. Die Reaktionsgefäße der Erfindung haben diese Nachteile nicht.

**Patentansprüche**

1. Analysevorrichtung mit mindestens einem wenige Mikroliter Flüssigkeit fassenden Reaktionsgefäß, bestehend aus mindestens zwei voneinander trannbaren und gegeneinander beweglichen Platten, die Adhäsionsflächen (1; 2) tragen, wobei sich die Adhäsionsflächen mehrerer Platten gegenüberliegen und das oder die Reaktionsgefäße formen, indem sie die zu untersuchende Flüssigkeit (4) von mindestens zwei Seiten her festhalten, dadurch gekennzeichnet, daß die Adhäsionsflächen länglich ausgebildet und an den Längsenden mit für den Meßstrahl eines Photometers durchlässigen Erhebungen (3a; 3b) versehen sind.

2. Vorrichtung nach Anspruch 1, dadurch gekennzeichnet, daß die Adhäsionsflächen zweier Platten (101) oder einer Platte (102; 103; 104) in der Ebene der Plattenoberfläche liegen.

3. Vorrichtung nach einem der vorstehenden Ansprüche oder nach beiden, dadurch gekennzeichnet, daß die Adhäsionsflächen zweier Platten (106; 108; 114; 116) oder einer Platte (102; 104; 105; 113) gegenüber der Plattenoberfläche erhaben angeordnet sind.

4. Vorrichtung nach einem oder mehreren der vorstehenden Ansprüche, dadurch gekennzeichnet, daß die Adhäsionsflächen zweier Platten (111) oder einer Platte (103; 107) vertieft angeordnet sind.

5. Vorrichtung nach einem oder mehreren der vorstehenden Ansprüche, dadurch gekennzeichnet, daß die Länge der Adhäsionsflächen gleich der Breite der Platten ist.

6. Vorrichtung nach einem oder mehreren der vorstehenden Ansprüche, dadurch gekennzeichnet, daß die Adhäsionsflächen Ausbuchtungen enthalten, die außerhalb des Strahlenganges angeordnet sind.

7. Vorrichtung nach einem oder mehreren der vorstehenden Ansprüche, dadurch gekennzeichnet, daß die Adhäsionsflächen (1; 2) und/oder die Erhebungen (Fenster 3a; Fenster 3b) vor Beginn der Analysen mit Proben und/oder mit Reagenzien vorbeschichtet sind.

8. Vorrichtung nach einem oder mehreren der vorstehenden Ansprüche zum Mischen (3001; 3002; 3003; 3004) der Flüssigkeit zwischen den Adhäsionsflächen, gekennzeichnet durch

Mittel zur parallelen Anordnung der Platten zueinander,

Mittel, die ein seitliches Verrutschen der Platten gegeneinander verhindern,

Mittel zur Einstellung eines kleinsten und eines größten Plattenabstandes und

Mittel zur Veränderung des Abstandes beider Platten zwischen dem kleinsten und dem größten Wert.

9. Verwendung einer Vorrichtung nach einem oder mehreren der vorstehenden Ansprüche, dadurch gekennzeichnet, daß die Adhäsionsflächen der zusammengesetzten Vorrichtung in einem solchen Abstand voneinander angeordnet werden, daß Luft durch Spalte zwischen den Adhäsionsflächen treten kann, die Flüssigkeit aber zurückgehalten wird.

**Revendications**

1. Dispositif pour analyses comportant au moins un récipient de réaction pouvant contenir quelques microlitres de liquide, constitué d'au moins deux plaques séparables l'une de l'autre et déplaçables l'une vers l'autre et portant des zones d'adhésion (1; 2), lesdites zones d'adhésion de plusieurs plaques étant disposées l'une en face de l'autre formant ainsi le ou les récipient(s) de réaction, de manière à maintenir d'au moins deux côtés le liquide (4) à analyser, caractérisé en ce que les zones d'adhésion sont de forme allongée et pourvue à leurs extrémités longitudinales de saillies (3a; 3b) laissant passer le faisceau de mesure d'un photomètre.

2. Dispositif selon la revendication 1, caractérisé en ce que les zones d'adhésion de deux plaques (101) ou d'une plaque (102; 103; 104) sont situées dans le plan de la surface des plaques.

3. Dispositif selon l'une des revendications précédentes ou les deux, caractérisé en ce que les zones d'adhésion de deux plaques (106; 108; 114; 116) ou d'une plaque (102; 104; 105; 113) sont disposées en relief par rapport à la surface des plaques.

4. Dispositif selon l'une ou plusieurs des revendications précédentes, caractérisé en ce que les zones d'adhésion de deux plaques (111) ou d'une plaque (103; 107) sont disposées en creux.

5. Dispositif selon l'une ou plusieurs des revendications précédentes, caractérisé en ce que la longueur des zones d'adhésion est la même que la largeur des plaques.

6. Dispositif selon l'une ou plusieurs des revendications précédentes, caractérisé en ce que les zones d'adhésion comportent des courbures aménagées en dehors du passage du faisceau.

7. Dispositif selon l'une ou plusieurs des revendications précédentes, caractérisé en ce que les zones d'adhésion (1; 2) et/ou les saillies (fenêtre 3a; fenêtre 3b) sont recouvertes à l'avance d'échantillons et/ou de réactifs avant le début des analyses.

8. Dispositif selon l'une ou plusieurs des revendications précédentes pour mélanger (3001; 3002; 3003; 3004) le liquide entre les zones d'adhésion, caractérisé par:

— des moyens pour disposer en parallèle des plaques l'une par rapport à l'autre,
— des moyens pour empêcher un glissement latéral des plaques l'une vers l'autre,
— des moyens pour régler la distance minimale et la distance maximale entre les plaques, et
— des moyens pour modifier l'écartement des deux plaques entre la valeur minimale et la valeur maximale.

9. Utilisation d'un dispositif selon l'une ou plusieurs des revendications précédentes, caractérisé en ce que les zones d'adhésion du dispositif assemblé sont aménagées à une distance l'une de l'autre telle que de l'air puisse pénétrer par des fentes entre les zones d'adhésion, mais que le liquide soit retenu.

**Claims**

1. Analysis apparatus with at least one reaction vessel which contains a few microlitres of liquid and consists of at least two plates which carry adhesion surfaces (1; 2) and which are separable from one another and movable relatively to one another, the adhesion surfaces of several plates facing one another and forming the reaction vessel or vessels, by retaining the liquid (4) to be investigated from at least two sides, characterised in that the adhesion surfaces are made elongated and are provided at the ends of their length with protuberances (3a; 3b) which are permeable for the measuring beam of a photometer.

2. Apparatus according to claim 1, charcacterised in that the adhesion surfaces of two plates (101) or of one plate (102; 103; 104) lie in the plane of the plate surface.

3. Apparatus according to one or both of the preceding claims, characterised in that the adhesion surfaces of two plates (106; 108; 114; 116) or of one plate (102; 104; 105; 113) are arranged elevated with respect to the plate surface.

4. Apparatus according to one or more of the preceding claims, characterised in that the adhesion surfaces of two plates (111) or of one plate (103; 107) are arranged recessed.

5. Apparatus according to one or more of the preceding claims, characterised in that the length of the adhesion surfaces is equal to the width of the plates.

6. Apparatus according to one or more of the preceding claims, characterised in that the adhesion surfaces contain protuberances which are arranged outside the path of rays.

7. Apparatus according to one or more of the preceding claims, characterised in that the adhesion surfaces (1; 2) and/or the protuberances (window 3a; window 3b) are pre-coated, prior to commencing the analyses, with specimens and/or with reagents.

8. Apparatus according to one or more of the preceding claims for the mixing (3001; 3002; 3003; 3004) of the liquid between the adhesion surfaces, characterised by

means for arranging the plates parallel to one another,

means which prevent a lateral misplacement of the plates relatively to one another,

means for the setting of a smallest and a largest plate spacing, and

means for varying the spacing of the two plates between the smallest and the largest values.

9. Use of an apparatus according to one or more of the preceding claims, characterised in that the adhesion surfaces of the assembled apparatus are arranged at such a spacing from one another that air is able to pass through gaps between the adhesion surfaces, but liquid is held back.

2

3 b

1

10,00
mm

4

102

3 a

*FIG.1*

FIG.2

FIG.3

2

3 b

3 a

1

4

112

FIG.4

101    105    109    113

102    106    110    114

103    107    111    115

104    108    112    116

117    119

118    120    121

5

FIG.5

1 a

1 b

FIG.6

FIG.7

7 001 a
7 001 b

7 002 a
7 002 b

7 003 a
7 003 b

7 004 a, b

7 005

7 006

3 a
3 b

FIG. 8

FIG.9

FIG. 10

11 001

12

14

n = 20

13

10.00 mm

FIG.11

12 001

*FIG.12*

10.00 mm

13 001    FIG.13